# EUROPEAN PATENT APPLICATION

(11) **EP 4 609 931 A1**
(43) Date of publication of application: **03.09.2025**
(21) Application number: 23882425.4
(22) Date of filing: 12.10.2023
(51) Int. Cl.: B01D 3/16, B01D 59/04

(54) **DISTILLATION DEVICE AND METHOD FOR OPERATING DISTILLATION DEVICE**

(30) Priority: 27.10.2022 JP 2022172159
(71) Applicant: Taiyo Nippon Sanso Corporation, Tokyo 142-8558 (JP)
(72) Inventor: HIROUMI, Tsuyoshi, Tokyo 142-8558 (JP); IGARASHI, Takehiro, Tokyo 142-8558 (JP)
(74) Representative: HGF
(86) International application number: PCT/JP2023/036973
(87) International publication number: WO 2024/090216

(57) **Abstract**

An object of the present invention is to provide a distillation device which can shorten the startup time. The present invention provides a distillation device (1) including: one or more packed columns (D) that have a regular packing and concentrate a high-boiling point component in a liquid side and a low-boiling point component in a gas side by contact between gas and liquid; one or more evaporators (R) that vaporize at least a part of a descending liquid in the packed column (D) and introduce it into the packed column (D) as an ascending gas; one or more condensers (C) that liquefy at least a part of the ascending gas in the packed column (D) and introduce it into the packed column (D) as a reflux liquid; a liquid supply path (L5) that is located between at least one of the evaporators (R) and an upper part of at least one of the packed columns (D); one or more liquid storage containers (H) that are located in the liquid supply path (L5); and one or more gas supply paths (L7) that are located in a lower part of the packed column (D) to which the liquid supply path (L5) is connected.

## Description

### TECHNICAL FIELD

The present invention relates to a distillation device and a method for operating a distillation device.

### BACKGROUND ART

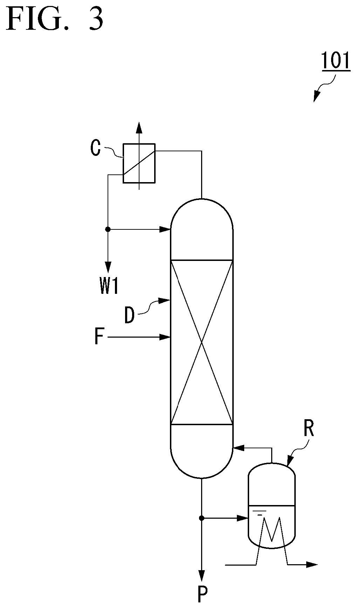

FIG. 3 is a system diagram showing an example of the configuration of a conventional distillation device. As shown in FIG. 3, the conventional distillation device 101 includes a packed column D having a regular packing in a metal sheet form therein to increase the contact area between gas and liquid, a condenser C located above the packed column D, which liquefies gas flowing out from the top of the packed column D and returns it as a reflux liquid, and a reboiler R located below the packed column D, which gasifies liquid at the bottom of the packed column D and returns it as an ascending gas. In the distillation device 101, a raw material F is supplied into the packed column D, and a high-boiling point component is concentrated in the liquid side and a low-boiling point component is concentrated in the gas side by contact between gas and liquid in the packed column D. In the distillation device 101, a part of the liquid at the bottom of the packed column D is led out as a product P, and a part of the liquid liquefied by the condenser C is discharged to the outside of the system as a waste liquid W1.

It is generally known that liquids with high surface tension have poor wettability with metal surfaces. For example, when distilling an aqueous solution containing a large amount of water, if a packed column D having a regular packing in a metal sheet form as shown in FIG. 3 is used, the "Height Equivalent to a Theoretical Plate (HETP)", which is an index of distillation performance (packing performance), is a poor value of 200 mm or more (see Non-Patent Document 1).

This is presumably because the liquid does not spread over the entire surface of the packing due to poor wettability of the liquid to the metal surface, reducing the contact area between gas and liquid, making it difficult to proceed with distillation separation. It is known that this condition is particularly likely to occur when starting up a distillation device by simply increasing the gas load in the packed column and maintaining a steady state at the operating load.

It is known that in a lab-scale packed column with a column diameter of 50 mm or less using irregular packing Dixon rings, which are formed by rolling up mesh-shaped metal plates, a liquid film is formed on the entire surface of the packing by applying a load, which is greater than the normal operation load, and equal to or greater than the loading point, at the time of startup, thereby obtaining good distillation performance with an HETP of 100 mm or less (see Non-Patent Document 2). Generally, when distilling a liquid with a high surface tension, a mesh-shaped packing is mainly used as the regular packing, but it is also known that good distillation performance can be obtained in a packed column using regular packing made of mesh-shaped metal plates by performing a similar startup operation.

Therefore, when a distillation device is started up, the packed column is overloaded to quickly achieve "wetting of the packing material." In this case, it is necessary to create a larger holdup amount (liquid volume) in the packed column than usual. For this reason, in conventional distillation devices, it is necessary to operate the device with more ascending gas and descending liquid than in normal operation at startup.

That is, in the conventional distillation device, although they are not used in steady operation, it was necessary to increase the evaporation capacity of the reboiler R and the condensation capacity of the condenser C for startup. In addition, when liquid nitrogen or the like is used as a cooling source for the condenser C, the supply equipment system itself needs to be designed for startup. In addition, when transitioning to steady operation after startup, it was necessary to enlarge the reboiler R in order to recover the cold fluid present in the packed column.

### PRIOR ART DOCUMENTS

### NON-PATENT DOCUMENTS

Non-Patent Document 1: Hirose Eiichi, Watari Kazuo, Regular packing in systems with high surface tension and liquid dispersers with low liquid load, Separation Technology, Vol. 44, No. 1, pp. 38-42
Non-Patent Document 2: O. G. Dixon, High efficiency laboratory fractionation, I. Gause Ring Packing and Flooding Technique for Laboratory Columns, J. S. C. L., 68, March, 1949, pp. 88-91.

### SUMMARY OF INVENTION

### PROBLEM TO BE SOLVED BY THE INVENTION

As described above, in the conventional distillation device and its method for operating, a load larger than that of steady operation must be temporarily applied to the reboiler R, which results in a larger container for the reboiler R. That is, in order to spread the liquid film on the surface of the regular packing, the amount of the liquid stored in the container constituting the reboiler R is increased to an excess, and then the device is started, so the liquid retention volume of the entire device is large. This poses the problem of a long "startup time" from the startup until a steady state concentration distribution of liquid is formed in the packed column.

The present invention has been made in consideration of the above circumstances, and an object of the present invention is to provide a distillation device and a method for operating the same that can shorten the startup time.

### MEANS FOR SOLVING THE PROBLEM

In order to solve the above problems, the present invention has the following configuration.
[1] A distillation device including:
   one or more packed columns that have a regular packing and concentrate a high-boiling point component in a liquid side and a low-boiling point component in a gas side by contact between gas and liquid;
   one or more evaporators that vaporize at least a part of a descending liquid in the packed column and introduce it into the packed column as an ascending gas;
   one or more condensers that liquefy at least a part of the ascending gas in the packed column and introduce it into the packed column as a reflux liquid;
   a liquid supply path that is located between at least one of the evaporators and an upper part of at least one of the packed columns;
   one or more liquid storage containers that are located in the liquid supply path; and
   one or more gas supply paths that are located in a lower part of the packed column to which the liquid supply path is connected.
[2] The distillation device according to [1],
   wherein the distillation device further includes a pressure supply device that is located in the liquid supply path.
[3] The distillation device according to [1] or [2],
   wherein the distillation device further includes:
   a gas discharge path that is located above the packed column to which the liquid supply path and the gas supply path are connected, and
   a gas-liquid separator that is located in the gas discharge path.
[4] The distillation device according to [3],
   wherein the distillation device further includes an exhaust device that is located in the gas discharge path.
[5] The distillation device according to [1],
   wherein the distillation device further includes a differential pressure gauge that measures a differential pressure between the upper part and the lower part of the packed column to which the liquid supply path and the gas supply path are connected.
[6] A distillation method using a distillation device including one or more packed columns, in which at least a part of a liquid located at the lower part of a packed column is vaporized by an evaporator, and a part thereof is introduced into the packed column as an ascending gas, and at least a part of a gas at an upper part of the packed column is liquefied by a condenser, and a part thereof is introduced into the packed column as a descending liquid,
   wherein when starting up the distillation device, in at least one of the packed columns, a part of a liquid introduced into the evaporator is supplied to the upper part of the packed column as a startup liquid, and a startup gas is supplied from the lower part of the packed column, and when the distillation device is in steady operation, a part of the liquid used as the startup fluid is led out to the outside of the evaporator.
[7] The distillation method according to [6],
   wherein a part of the gas used as the startup gas is discharged above the packed column.
[8] The distillation method according to [6] or [7],
   wherein when starting up the distillation device, a distillation load in the packed column is made to be greater than a distillation load at a loading point.
[9] The distillation method according to [8],
   wherein a state of the distillation load in the packed column is monitored by measuring a differential pressure between an upper part and a lower part of the packed column.

### EFFECTS OF THE INVENTION

According to the distillation device and a distillation method of the present invention, it is possible to shorten the startup time.

### BRIEF DESCRIPTION OF THE DRAWINGS

[FIG.1] FIG. 1 is a system diagram showing the configuration of a distillation device of one embodiment according to the present invention.
[FIG.2] FIG. 2 is a system diagram showing another configuration of a distillation device of another embodiment according to the present invention.
[FIG.3] FIG. 3 is a system diagram showing the configuration of a conventional distillation device.

### DETAILED DESCRIPTION OF THE PREFERRED EMBODIMENTS

Hereinafter, a distillation device and a distillation method according to an embodiment of the present invention will be described in detail with reference to figures. In addition, in the figures used in the following description, characteristic parts may be enlarged for the sake of convenience in order to make the characteristics easier to understand, and the dimensional ratios of each component may not necessarily be the same as the actual ones.

The meanings and definitions of the terms used in the present description are as follows.

A numerical range expressed as "~" means a numerical range with the numerical values before and after "~" as the lower and upper limits.

The upper part of the packed column (also called the top part of the packed column) refers to the vertical direction upward from the center of the packed column. The lower part of the packed column (also called the bottom part of the packed column) refers to the vertical direction downward from the center of the packed column.

The loading phenomenon refers to a state in which, when gas and liquid are in countercurrent contact in a packed column, if the liquid phase state is kept constant and the flow rate of the gas phase is increased, when a certain flow rate is reached, the liquid holdup amount in the column begins to increase and at the same time the rate of increase in pressure drop also increases. The loading point refers to the point at which the loading phenomenon occurs.

The F factor (Fs) is an index that indicates the operating load (distillation load) of a packed column. The normal operating load of a packed column is around Fs = 1.0, and a value exceeding 1 indicates a high operating load.

### <Distillation device>

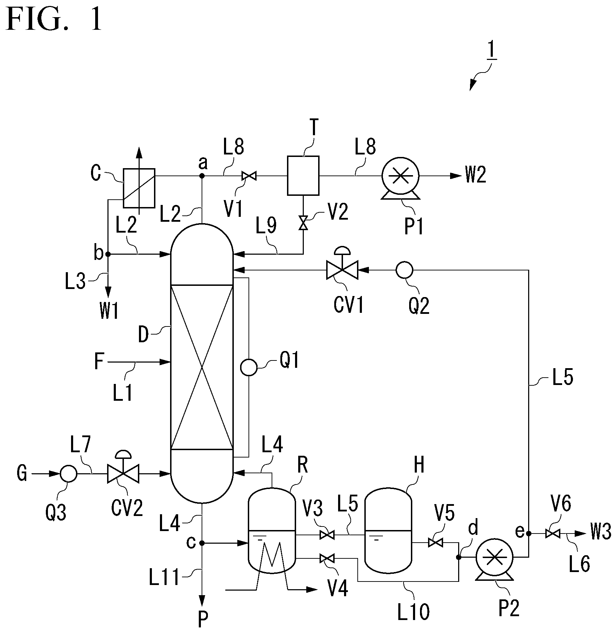

First, the configuration of a distillation device, which is one embodiment of the present invention, will be described. FIG. 1 is a system diagram showing the configuration of a distillation device 1, which is one embodiment of the present invention.

As shown in FIG. 1, the distillation device 1 of the present embodiment is roughly configured to include a packed column D, a reboiler (evaporator) R, a condenser C, a spare liquid container (liquid storage container) H, and paths L1 to L11.

The packed column D is a column arranged so that its axis is vertical, and a high-boiling point component is concentrated in the liquid side and a low-boiling point component is concentrated in the gas side by contact between gas and liquid in the column. Here, the packed column D has a regular packing therein to increase the contact area between gas and liquid.

The regular packing is not particularly limited and can be appropriately selected depending on the components to be distilled. When distilling a liquid with a high surface tension, it is preferable to use mesh-shaped packing as the regular packing.

A path L1 is connected to the center of the packed column D for introducing a raw material F into the packed column D.

A path L2 is located at the upper part of the packed column D. A base end of the path L2 is connected to the top of packed column D, and a tip end of the path L2 is connected to the upper part of the packed column D. In addition, a condenser C is located in the path L2.

The condenser C is located on the path L2 and liquefies at least a part of the ascending gas flowing out from the top of packed column D, and introduces a part of the liquefied gas as a reflux liquid into the upper part of the packed column D. The cooling source for the condenser C can be, for example, liquefied gas or water.

The path L2 branches into a path (gas discharge path) L8 at a branch point a located on the primary side of the condenser C. In addition, the path L2 branches into a path L3 at a branch point b located on the secondary side of the condenser C.

The path L8 is a gas discharge path that is located above the packed column D and branches off from the path L2 at the branch point a. The path L8 includes, in order from the primary side, a gate valve V1, a gas-liquid separator T, and a vacuum exhaust pump (exhaust device) P1.

The gate valve V1 is a valve that blocks the flow of a fluid. It is preferable that the gate valve V1 can be adjusted to any opening from a fully closed state (opening degree 0%) to a fully open state (opening degree 100%). The same applies to the gate valves V2 to V6 described below.

By opening the gate valve V1 (opening degree exceeding 0%), at least a part of the ascending gas flowing out from the top of the packed column D through the path L2 is introduced into the path L8.

The gas-liquid separator T is located on the secondary side of the gate valve V1 in the path L8, and has a function of separating the fluid flowing through the path L8 into liquid and gas. The gas-liquid separator T is not particularly limited, but may be a container having a cooling source for cooling the gas in the inner space and capable of storing liquid. A path L9 is connected to the gas-liquid separator T.

The line L9 is located between the gas-liquid separator T and the packed column D. A gate valve V2 is also located in the line L9. By opening the gate valve V2, the liquid separated by the gas-liquid separator T can be returned to a position near the top of the packed column D.

The vacuum exhaust pump P1 is located on the secondary side of the gas-liquid separator T in the path 8, and is a pump for discharging the gas separated by the gas-liquid separator T to the outside of the system as exhaust gas W2. The vacuum exhaust pump P1 is not particularly limited, but may be, for example, a rotary pump.

A path L3 is a liquid discharge path that branches off from the path L2 at a branch point b. Of the liquid liquefied by condenser C, a part is introduced as a reflux liquid into the upper part of the packed column D through the path L2, and the remainder is discharged to the outside of the system as waste liquid W1 through the path L3.

A path L4 is connected to the lower part of the packed column D. A base end of the path L4 is connected to the bottom of the packed column D, and a tip end of the path L4 is connected to the lower part of the packed column D. The reboiler (evaporator) R is located in the path L4. The path L4 branches into a path (product discharge path) L11 at a branch point c located on the primary side of the reboiler R.

The path L11 is a liquid lead-out path that branches off from the path L4 at a branch point c. That is, the path L 11 is a path for leading out, as a product P, a part of the liquid that is led out from the path L4 among the liquid stored in the bottom of the packed column D.

The reboiler (evaporator) R is located on the path L4, and vaporizes at least a part of the descending liquid flowing out from the bottom of the packed column D, and introduces it as an ascending gas into the lower part of the packed column D. That is, the reboiler R has a container for storing the liquid and a heat source for heating the liquid. As the heat source of the reboiler R, for example, the same type of gas as the cooling source of the condenser C, water, a heater, or the like can be used.

A path (liquid supply path) L5 and a path L10 are connected to the container constituting the reboiler R.

The path L5 is a liquid supply path located between the reboiler R and the packed column D, with its base end connected to the container constituting the reboiler R and its tip end connected to a position near the top of packed column D. Also, in order from the base end (primary side), a gate valve V3, a spare liquid container (liquid storage container) H, a gate valve V5, a lifting pump (pressure delivery device) P2, a liquid flow rate meter Q2, and flow rate control valve CV1 are located in the path L5.

The spare liquid container H is located on the secondary side of the reboiler R in the line L5, and is capable of storing the same substance as the liquid being distilled in the packed column D inside.

The size (capacity) of the spare liquid container H is not particularly limited and can be selected appropriately depending on the size of the distillation device 1.

Specifically, for example, when concentrating heavy water using a packed column D with a packing length of 30 m and a column diameter of 0.2 m, if the hold-up amount of liquid during normal operation is about 30 L, the capacity of the spare liquid container H can be set to 50 to 100 L.

The lifting pump P2 is located on the secondary side of the spare liquid container H and is a pump that lifts the liquid in the container constituting the reboiler R and the spare liquid container H to a position near the top of the packed column D. The lifting pump P2 is not particularly limited, but for example, a magnet pump can be used.

The liquid flow rate meter Q2 is located on the secondary side of the liquid lifting pump P2 and measures the flow rate of the liquid flowing through the path L5. The liquid flow rate meter Q2 is not particularly limited, but may be of a thermal conduction type flow rate meter, for example.

The flow rate control valve CV1 is located on the secondary side of the liquid flow rate meter Q2, and is a valve that adjusts the opening continuously or stepwise from fully closed (0% opening) to fully open (100% opening) depending on the flow rate. The same applies to the flow rate control valve CV2.

According to the distillation device 1 of the present embodiment, by opening the gate valve V3 and closing the gate valve V5 in the path L5, a part of the liquid in the container constituting the reboiler R can be stored in the spare liquid container H.

Moreover, according to the distillation device 1 of the present embodiment, by opening the gate valve V3 and the gate valve V5 in the path L5, at least a part of the liquid stored in the container constituting the reboiler R and the spare liquid container H can be pumped by the lifting pump 2 from a position near the bottom to a position near the top of the packed column D, and can be introduced at a required flow rate by the liquid flow rate meter Q2 and the flow rate control valve CV1 to a position near the top of the packed column D.

The path L5 merges with the path L10 at a junction point d located between the gate valve V5 and the liquid pump P2. The path L5 also branches into the path L6 at a branch point e located between the liquid pump P2 and the liquid flow rate meter Q2.

A path L6 is a liquid discharge path that branches off from the path L5 at a branch point e. A gate valve V6 is located in the path L6. By opening the gate valve V6, a part of the liquid flowing through path L5 is discharged to the outside of the system as waste liquid W3 through the path L6.

The path L10 is a liquid supply path located between the reboiler R and the junction point d in the path L5, and has a base end connected to a container constituting the reboiler R and a tip end connected to the junction point d in the path L5. A gate valve V4 is located in the path L10.

According to the distillation device 1 of the present embodiment, by opening the gate valve V4, a part of the liquid in the container constituting the reboiler R can be supplied to the lifting pump P2 without passing through the spare liquid container H. In other words, the path L10 is a bypass path that circumvents the spare liquid container H.

A path (gas supply path) L7 is connected to the lower part of the packed column D for introducing an ascending gas G into the packed column D. In addition, a gas flow rate meter Q3 and a flow rate control valve CV2 are located in the path L7, in that order from the primary side.

The gas flow rate meter Q3 measures the flow rate of the gas flowing through the path L7. The gas flow rate meter Q3 is not particularly limited, but may be, for example, a differential pressure type flow rate meter.

According to the distillation device 1 of the present embodiment, since the distillation device 1 has the path L7, the gas flow rate meter Q3, and the flow rate control valve CV2, it is possible to introduce the ascending gas G, whose flow rate has been controlled to a required flow rate, into the packed column D from the lower part of the packed column D (i.e., a position near the bottom of the column).

The distillation device 1 of the present embodiment includes a differential pressure gauge Q1 that measures the differential pressure between the upper part and the lower part of the packed column D.

### <Distillation method>

Next, a distillation method according to one embodiment of the present invention will be described using the distillation device 1 explained above as an example.

The distillation method of the present embodiment is a distillation method that uses the distillation device 1 including the packed column D, in which at least a part of a liquid located at the lower part of the packed column D is vaporized by the reboiler (evaporator) R, and is introduced into the packed column D as an ascending gas, and at least a part of a gas located at the upper part of the packed column D is liquefied by the condenser C, and is introduced into the packed column D as a descending liquid, wherein when the distillation device 1 is started up, a part of a liquid introduced into the reboiler R is supplied to the upper part of the packed column D as a startup liquid, and an ascending gas G is supplied from the lower part of the packed column D as a startup gas, and when the distillation device 1 is in steady operation, a part of the liquid used as the startup fluid is led out from the reboiler R and stored in the spare liquid container H.

Hereinafter, a method for starting up the distillation device 1 and a method for operating the distillation device 1 during steady operation will be specifically described, taking as an example the case of concentrating deuterium by distilling pure water.

### (Method for starting up distillation device)

In the distillation method of the present embodiment, when distillation device 1 is started, operations are performed to intentionally maintain a high-load operating state of the packed column D in the manner shown in step 1 and step 2 below.

### "Step 1"

First, the heat load of the packed column D is increased above the load at the steady operation (i.e., the output of the reboiler R is increased), and the opening of the flow rate control valve CV1 located in the line L5 connected to a position near the top of packed column D is adjusted to introduce a liquid having an approximately the same composition as that of the substance to be distilled (water, in the case of concentrating deuterium by distilling pure water) into the packed column D so that the flow rate becomes the flow rate when all gas with 1.5 or more in Fs terms is liquefied. This liquid is supplied from a container constituting the reboiler R connected to the packed column D or a spare liquid container H by opening the gate valves V3 to V5 and using the line L5 and the lifting pump P2.

### "Step 2"

Then, the opening of the flow rate control valve CV2 located in the line L7 connected to a position near the bottom of the packed column D is adjusted to introduce an ascending gas G into the packed column D as a starting gas. The ascending gas G may be a gasified process fluid (water vapor when concentrating deuterium by distilling pure water) or an inert gas with a boiling point lower than that of water, such as nitrogen gas or argon gas. The ascending gas G is introduced at a flow rate of 1.5 or more in Fs terms. The introduced ascending gas G is exhausted as an exhaust gas W2 by the vacuum exhaust pump P1 from the path L8 branched from the path L2 connecting the top of the packed column D and the condenser C. When a part of the ascending gas G is exhausted, the liquid component contained in the ascending gas G is passed through a gas-liquid separator T and then recovered in a packed column D through the path L9.

In the distillation method of the present embodiment, when distillation device 1 is started, the operating load (distillation load) in the packed column D is set to a state where the load is greater than the operating load (distillation load) at the loading point.

Whether the operating load (distillation load) in the packed column D has reached the load at the loading point or greater can be confirmed by measuring the differential pressure between the upper part and the lower part of the packed column D using the differential pressure gauge Q1. In other words, the state of the operating load (distillation load) in the packed column D can be monitored using the differential pressure gauge Q1.

The value of the differential pressure gauge Q1 differs depending on the type of the packing in the packed column D. Specifically, when deuterium is concentrated by distilling pure water, it is determined that the loading point has been reached or exceeded when the value of the differential pressure gauge Q1 reaches 1 kPa/m or more.

Next, after the operating load (distillation load) in the packed column D reaches or exceeds the load at the loading point, steps 1 and 2 are maintained until a sufficient time (two hours or more in the case of concentrating deuterium by distilling pure water) has elapsed for a liquid film to form on the packing in the packed column D.

### (Transition to steady operation)

In the distillation method of the present embodiment, after the startup operation of the distillation device 1 is completed, an operation is performed to return to a steady operation, that is, to a normal operating load (distillation load; Fs = approximately 1.0).

Specifically, when the heat load of the reboiler R is reduced to the normal operating load after the startup operation is completed, most of the liquid that has spread over the packing in the packed column D returns to the container constituting the reboiler R, so that the amount of liquid necessary for distillation is left in the container constituting the reboiler R, and the excess liquid is collected in the spare liquid container H.

Incidentally, with the conventional method for operating a distillation device, it was necessary to charge into the container constituting the reboiler R an amount of liquid that was more than twice the holdup amount during normal operation (approximately 3% of the packed column volume) when the device was started up.

Furthermore, with the conventional method for operating a distillation device, it was necessary to apply a load of more than 1.5 times (more than 1.5 in Fs terms) the normal operating load to the reboiler R when the device was started up to increase the amount of the ascending gas.

In contrast, with the distillation method of the present embodiment, the amount of liquid held during charging can be significantly reduced. This reduction in the amount of liquid held can shorten the startup time.

Also, with the distillation method of the present embodiment, the required heat load of the reboiler R can be reduced to 70% or less when starting up the distillation device.

As described above, according to the distillation device 1 and distillation method (startup method) of the present embodiment, the amount of liquid held in the reboiler R can be reduced, and the startup time can be shortened.

Specifically, for example, when concentrating heavy water using a packed column with a packing length of 30 m and a column diameter of 0.2 m, the amount of liquid held can be reduced by about 30 L, making it possible to shorten startup time by about two weeks.

Since the required heat load of the reboiler R can be reduced, equipment costs can be reduced.

In addition, when concentrating heavy water using a packed column with a packing length of 30 m and a column diameter of 0.2 m, the heat load during normal operation is 22.5 kW and the heat load during startup operation is 50 kW, making it possible to reduce the heat load by about 27.5 kW.

The technical scope of the present invention is not limited to the embodiments above, and various modifications can be made without departing from the spirit of the present invention.

In the present invention, it is preferable to design the evaporation capacity of the reboiler R and the condensation capacity of the condenser C assuming steady operation.

Furthermore, in the present invention, when the operating pressure in the packed column D is lower than atmospheric pressure, the fluid in the packed column D may be sucked by the vacuum exhaust pump P1.

In the distillation device 1 according to the embodiment above, the reboiler R and the spare liquid container H are separated by the gate valve V3, but the present invention is not limited to this embodiment. The reboiler R and the spare liquid container H may be directly connected to each other through the path L5 that does not include the gate valve V3.

In the embodiment above, the distillation device 1 is described as having one packed column D, but the present invention is not limited to this embodiment. The present invention can also be implemented in a case where the number of packed columns is two or more, and each packed column can be provided with the liquid supply path L5 located between the container constituting the reboiler R and the packed column, and the gas supply path L7 connected to a position near the bottom of the packed column.

In this case, the ascending gas G may be supplied to each packed column simultaneously.

Furthermore, multiple packed columns may share the path L5 (liquid supply path) and the path L7 (gas supply path), and the liquid fluid may be supplied to each packed column simultaneously. In other words, each packed column may be started up simultaneously.

Alternatively, each packed column may be started from a part thereof. In this case, a part of the ascending gas G in an already started packed column may be supplied as the ascending gas G to the packed column to be started. Also, liquid recovered in the spare liquid container H from an already started packed column may be supplied to the packed column to be started.

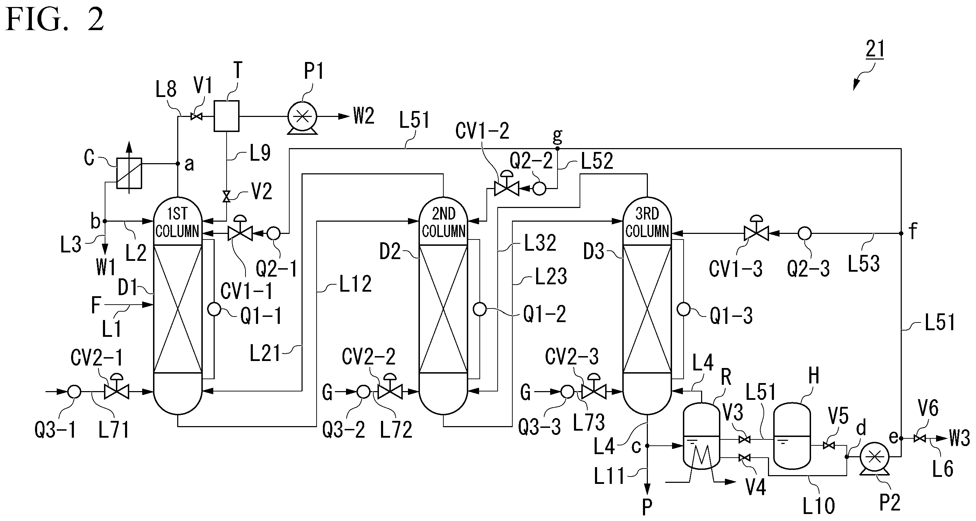

FIG. 2 is a system diagram showing another example of a distillation device according to an embodiment of the present invention. As shown in FIG. 2, the distillation device 21 is different from the distillation device 1 shown in FIG. 1 in that it includes packed columns D1 to D3 connected in series instead of the packed column D, paths L51 to L53 instead of the path L5, and paths L71 to L73 instead of the path L7. The other configurations of the distillation device 21 are the same as those of the distillation device 1, so the same reference numerals are used and the description is omitted.

As shown in FIG. 2, the paths L2 and L9 are connected to the upper part of the packed column D1.

The path L1 is connected to the center of the packed column D1 for introducing a raw material F into the packed column D.

The paths L12 and L21 are located between the packed column D1 and the packed column D2.

The path L12 has a base end connected to the bottom of the packed column D1 and a tip end connected to a position near the top of the packed column D2. This allows the path L12 to supply a part of the liquid stored at the bottom of the packed column D1 to a position near the top of the packed column D2 as a descending liquid.

The path L21 has a base end connected to the top of the packed column D2 and a tip end connected to a position near the bottom of the packed column D1. This allows the path L21 to supply a part of the gas stored at the top of the packed column D2 to a position near the bottom of the packed column D1 as an ascending gas.

The paths L23 and L32 are located between the packed column D2 and the packed column D3.

The path L23 has a base end connected to the bottom of a packed column D2 and a tip end connected to a position near the top of the packed column D3. This allows the path L23 to supply a part of the liquid stored at the bottom of the packed column D2 to a position near the top of a packed column D3 as a descending liquid.

The path L32 has a base end connected to the top of the packed column D3 and a tip end connected to a position near the bottom of the packed column D2. This allows the path L32 to supply a part of the gas stored at the top of the packed column D3 to a position near the bottom of the packed column D2 as an ascending gas.

The path L4 is connected to the lower part of the packed column D3.

The path L4 also includes the branch point C and the reboiler R.

The paths (gas supply paths) L71-73 are connected to the lower part of the packed columns D1-D3, respectively, for introducing the ascending gas G into the packed columns D1-D3. In addition, gas flow rate meters Q3-1-Q3-3 and flow rate control valves CV2-1-CV2-3 are located in the paths L71-73, in order from the primary side.

The liquid supply path L51 is connected to the reboiler R. The path L51 branches into the path L53 at a branch point f and into the path L52 at a branch point g.

Each of the liquid supply paths L51-53 are connected to the upper part of the packed columns D1-D3 to introduce a part of the liquid stored in the reboiler R or the spare liquid container H into the packed columns D1-D3 as a descending liquid. In addition, liquid flow rate meters Q2-1-2-3 and flow rate control valves CV1-1-1-3 are located in the paths L51-53, in order from the primary side, respectively.

As shown in FIG. 2, in the case of a distillation device 21 consisting of three packed columns D1 to D3, the packed columns D1 to D3 may be started simultaneously, or may be started sequentially starting from any one of the columns.

In the distillation device 21 shown in FIG. 2, the liquid stored at the bottom of the packed column D3 is introduced into the spare liquid container H through the path L51 as an example, but the present invention is not limited to this embodiment. For example, the liquid stored at the bottom of one or both of the packed columns D1 and D2 may be introduced into the spare liquid container H through a path not shown in figures.

In addition, in the distillation device 21 shown in FIG. 2, a configuration in which the vacuum exhaust pump P1 is connected only to the packed column D1 has been described as an example, but a configuration in which the vacuum exhaust pump P1 is connected to the upper part of one or both of the packed columns D1 and D2 may also be used.

In addition, in the embodiment above of the distillation device 1, 21, the case where deuterium is concentrated by distilling pure water has been described as an example, but the present invention is not limited to this embodiment. For example, the present invention may be applied to a device and a method for separating oxygen isotopes by using oxygen gas as the raw material F and continuously using multiple packed columns. In addition, the present invention may be applied to the distillation of an aqueous solution containing a hydrocarbon substance with a low concentration of a target component.

### EXAMPLES

The effects of the present invention will be described below with reference to examples, but the present invention is not limited to the configurations of the examples.

### <Example>

Pure water, which is a substance with a high surface tension, was distilled and deuterium was concentrated using the distillation device 1 including a packed column D having a metallic regular packing in a mesh-shaped with a packing length of 30 m and a column diameter of 0.2 m shown in FIG. 1.

When the distillation device was started, operations were performed to intentionally maintain a high load operating as shown in (1) and (2) below. After improving the distillation performance, operations were performed to return to the normal operating load (Fs = around 1.0).
(1) A liquid (water) having an approximately the same composition as the material to be distilled was introduced into the packed column D through the flow rate control valve CV1 located to a position near the top of the packed column D, and the flow rate was adjusted to the flow rate obtained when all the gas having an Fs of 1.5 or more was liquefied. This liquid was supplied from the reboiler R connected to the packed column D or the spare liquid container H using the lifting pump P2.
   The reboiler R and the spare liquid container H were equipped with the gate valves V3 to V5 to allow the introduction and removal of liquid. When the heat load of the reboiler R was reduced to the normal operating load after the startup operation was completed, most of the liquid that had spread over the packing in packed column D returned to the reboiler R. As a result, only the amount of liquid necessary for distillation was retained and the remainder was collected in the spare liquid container H.
(2) The ascending gas G was introduced into the packed column D through the flow rate control valve CV2 located to a position near the bottom of the packed column D. The ascending gas G used here was a gasified process fluid (steam). The ascending gas G was introduced at a flow rate of 1.5 or more in Fs terms. The introduced ascending gas G was exhausted using the built-in vacuum exhaust pump P1. During exhaust, the liquid component was recovered in the packed column D by passing through the gas-liquid separator T.

Whether the operating load (distillation load) in packed column D reached the load at the loading point or higher due to high load operation was confirmed based on the value of differential pressure gauge Q1 installed in packed column D.

When the differential pressure value of the differential pressure gauge Q1 reached 1 kPa/m or more, the steps (1) and (2) were maintained for more than two hours, and then operations were carried out to return to normal operation (i.e., the thermal load of the reboiler R was reduced to the normal operating load, or the introduction of the liquid and the ascending gas G was stopped).

The time required for these operations was approximately three hours in total.

### <Comparative Example>

Pure water, which is a substance with a high surface tension, was distilled and deuterium was concentrated using the distillation device 101 including a packed column D having a metallic regular packing in a mesh-shaped with a packing length of 30 m and a column diameter of 0.2 m shown in FIG. 3.

When the distillation device was started, the heat load on the reboiler R was gradually increased to more than 1.5 times the normal operating load (more than 1.5 in Fs terms), and after maintaining this state for more than two hours, it was returned to the normal operating load (Fs = around 1.0).

The time required for these operations was approximately three hours in total.

In the startup method of the comparative example, in addition to the minimum amount of liquid required for the reboiler R during normal operation, it was necessary to charge into the container constituting the reboiler R an amount of liquid (60 L or more) that was more than twice the hold-up amount during normal operation (approximately 3% of the packed column volume).

In contrast, in the example, since only the minimum amount of liquid required for the reboiler R during normal operation is required, it was possible to reduce the amount of liquid held during normal operation by more than 60 L compared to the comparative example. This reduction in the amount of liquid held made it possible to reduce the startup time to reach the product concentration by more than one month.

In addition, in the comparative example, it was necessary to apply a load of 1.5 times or more the operating load (1.5 or more in terms of Fs) to the reboiler R in order to increase the amount of the ascending gas. However, in the example, the required heat load of the reboiler R could be reduced to 70% or less of that in the comparative example.

### EXPLANATION OF SYMBOLS

- 1, 21: Distillation device
- C: Condenser
- CV1: Flow rate control valve
- CV2: Flow rate control valve
- D: Packed column
- D1: Packed column
- D2: Packed column
- D3: Packed column
- H: Spare liquid container (Liquid storage container)
- L1-L11, L12-L73: Path
- P1: Vacuum exhaust pump (Exhaust device)
- P2: Lifting pump (Pressure transfer device)
- Q1: Differential pressure gauge
- Q2: Liquid flow rate meter
- Q3: Gas flow rate meter
- R: Reboiler (Evaporator)
- T: Gas-liquid separator
- V1-V6: Gate valve

## Claims

1. A distillation device including:
one or more packed columns that have a regular packing and concentrate a high-boiling point component in a liquid side and a low-boiling point component in a gas side by contact between gas and liquid;
one or more evaporators that vaporize at least a part of a descending liquid in the packed column and introduce it into the packed column as an ascending gas;
one or more condensers that liquefy at least a part of the ascending gas in the packed column and introduce it into the packed column as a reflux liquid;
a liquid supply path that is located between at least one of the evaporators and an upper part of at least one of the packed columns;
one or more liquid storage containers that are located in the liquid supply path; and
one or more gas supply paths that are located in a lower part of the packed column to which the liquid supply path is connected.

2. The distillation device according to Claim 1,
wherein the distillation device further includes a pressure supply device that is located in the liquid supply path.

3. The distillation device according to Claim 1 or 2,
wherein the distillation device further includes:
a gas discharge path that is located above the packed column to which the liquid supply path and the gas supply path are connected, and
a gas-liquid separator that is located in the gas discharge path.

4. The distillation device according to Claim 3,
wherein the distillation device further includes an exhaust device that is located in the gas discharge path.

5. The distillation device according to Claim 1,
wherein the distillation device further includes a differential pressure gauge that measures a differential pressure between the upper part and the lower part of the packed column to which the liquid supply path and the gas supply path are connected.

6. A distillation method using a distillation device including one or more packed columns, in which at least a part of a liquid located at the lower part of a packed column is vaporized by an evaporator, and a part thereof is introduced into the packed column as an ascending gas, and at least a part of a gas at an upper part of the packed column is liquefied by a condenser, and a part thereof is introduced into the packed column as a descending liquid,
wherein when starting up the distillation device, in at least one of the packed columns, a part of a liquid introduced into the evaporator is supplied to the upper part of the packed column as a startup liquid, and a startup gas is supplied from the lower part of the packed column, and when the distillation device is in steady operation, a part of the liquid used as the startup fluid is led out to the outside of the evaporator.

7. The distillation method according to Claim 6,
wherein a part of the gas used as the startup gas is discharged above the packed column.

8. The distillation method according to Claim 6 or 7,
wherein when starting up the distillation device, a distillation load in the packed column is made to be greater than a distillation load at a loading point.

9. The distillation method according to Claim8,
wherein a state of the distillation load in the packed column is monitored by measuring a differential pressure between an upper part and a lower part of the packed column.
